# FASCICULE DE BREVET EUROPEEN

(11) **EP 0 377 731 B1**
(45) Date de publication et mention de la délivrance du brevet: **09.06.1993**
(21) Numéro de dépôt: 89908202.8
(22) Date de dépôt: 23.06.1989
(51) Int. Cl.: A21D 10/00, B65D 25/08

(54) **PROCEDE DE CONSERVATION DE COMPOSITIONS ALIMENTAIRES DU GENRE PATE A CREPES, BEIGNETS ET ANALOGUES**
KONSERVIERUNGSMETHODE FÜR LEBENSMITTELMISCHUNGEN, WIE PFANNKUCHENTEIG ODER ÄHNLICHES
PROCESS FOR PRESERVING FOOD COMPOSITIONS, SUCH AS DOUGH FOR PANCAKES, FRITTERS AND SIMILAR

(30) Priorité: 24.06.1988 FR 8808515
(43) Date de publication de la demande: 18.07.1990
(73) Titulaire: DENIS FRANCE, F-35000 Rennes (FR)
(72) Inventeur: VASSENEIX, André, F-45550 Saint-Denis-de-l'Hôtel (FR)
(74) Mandataire: Armengaud Ainé, Alain
(86) Numéro de dépôt international: FR8900327
(87) Numéro de publication internationale: WO8912396

(56) Documents cités:
- EP-A- 0 232 814
- CH-A- 471 544
- FR-A- 2 198 462
- FR-A- 2 507 573
- GB-A- 203 661
- US-A- 2 965 500

## Description

La présente invention concerne un procédé permettant la longue conservation de compositions alimentaires du genre pâtes à crêpes, beignets, blinis et analogues.

On sait que dans la composition des pâtes de ce genre, entrent des constituants de deux sortes :
- d'une part, la farine, quelle que soit son origine : froment, sarrazin ... dont l'amidon qu'elle contient provoque, au cours de la cuisson de la pâte, un phénomène de réticulation qui donne aux produits obtenus une texture très particulière.
- d'autre part, des éléments plus facilement solubles à l'eau, tels que oeufs, sucre, sel, lait et/ou filtrat alimentaire de soja, produits aromatisants.

Le problème auquel on est confronté pour réaliser la longue conservation de compositions de ce genre, tient au fait que si l'on veut utiliser à cette fin, compte tenu des dispositions légales qui régissent la matière, la stérilisation totale par chauffage à haute température :
- soit, actuellement, 115° pendant 10 mn,
- soit, 145° pendant 3mn,
on provoque, dès qu'une température de 60° C. est atteinte, la destruction des grains d'amidon, les rendant impropres à la réticulation dont il vient d'être question, et impossible la formation des produits souhaités.

Il convient d'ajouter que, outre l'impossibilité légale de recourir à l'addition, à la composition, de conservateurs, antibiotiques ou autres, il n'est pratiquement pas possible de faire appel à des techniques sophistiquées telle que l'ionisation, à raison de leur coût prohibitif, sans même être assuré de l'obtention d'une stérilité totale.

US-A-2965500 décrit un procédé de conditionnement de compositions alimentaires selon lequel on conditionne en deux groupes les composants d'un produit alimentaire, un premier groupe contenant de la farine et un second les ingrédients liquides, ces conditionnements étant réalisés dans de bonnes conditions d'aseptie. Dans ce procédé connu le stockage est réalisé directement sur le produit final obtenu après mélange des deux groupes préalablement conditionnés de façon séparée.

GB-A-203661 fait connaître un autre type de conditionnement de produits alimentaires à base de farine qui consiste à déshydrater le produit avant de l'introduire dans un récipient qui est ensuite fermé hermétiquement, mis sous vide et enfin rempli d'un gaz inerte.
Aucun de ces procédés connus ne permet de résoudre le problème soulevé ci-dessus de la longue conservation de produits alimentaires du type pâte à crêpes et similaires.

L'invention permet de résoudre ce problème de façon particulièrement simple et économique en apportant un procédé destiné à assurer la longue conservation de compositions alimentaires du type pâtes à crêpes, beignets, blinis dans la constitution desquelles entrent de la farine de céréales, des oeufs, du sucre, du lait ou un substitut du lait tel que le filtrat alimentaire de soja et des produits aromatisants, suivant lequel les constituants de la pâte sont répartis en deux phases, une phase poudre et une phase liquide stérilisée, caractérisé en ce que l'on incorpore à la phase poudre contenant la farine et le sucre, les blancs d'oeuf en poudre et à la phase liquide stérilisée, le jaune d'oeuf, en ce que chacune des phases est introduite dans un emballage distinct, aseptisé, étanche pour le stockage séparé des deux phases, et en ce que les deux phases sont mélangées lors de l'utilisation.

Chaque emballage consiste en un emballage de type aseptique, l'atmosphère de celui contenant la farine étant chimiquement inerte, de préférence constituée par un gaz neutre.

La réunion des deux phases se de façon extemporanée, au moyen des indications fournies au consommateur.

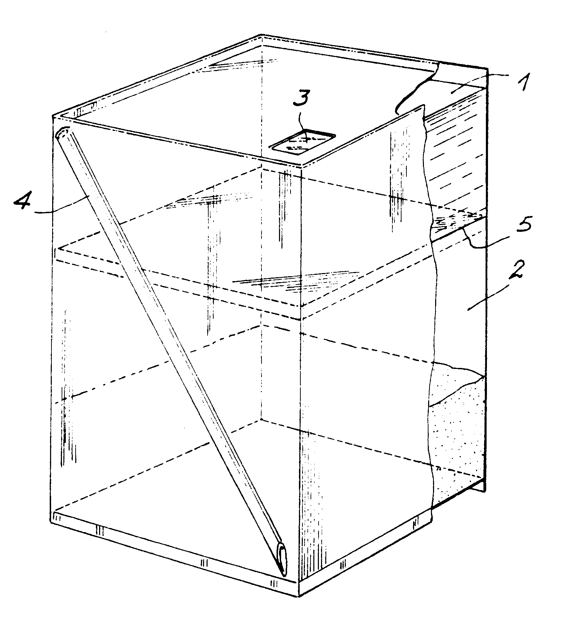

Le procédé suivant l'invention peut être avantageusement mis en oeuvre au moyen d'un conditionnement tel que celui dont on a décrit ci-après, en référence au dessin annexé, une forme de réalisation, étant bien précisé qu'il s'agit uniquement d'un exemple non limitatif :
Dans cet exemple, le conditionnement est constitué par deux capacités superposées, en toute matière quelconque convenable, la capacité supérieure 1 contenant la phase liquide et la capacité inférieure 2 la phase poudre. Ces capacités sont assemblées par tout moyen quelconque de façon à obtenir un bloc homogène étanche.

La capacité supérieure présente un orifice 3, obturé par un opercule en une matière permettant une perforation facile, au moyen d'une baguette 4, fixée à l'extérieur du conditionnement.

La capacité inférieure est séparée de la capacité supérieure par une surface 5, également en une matière (feuille d'aluminium par exemple) susceptible d'être perforée facilement au moyen de la baguette 4.

Le volume de la capacité inférieure est déterminé de façon à réserver un espace pour contenir la phase poudre, un espace correspondant au volume de liquide contenu dans la capacité supérieure 1 et un espace supplémentaire de façon à ce que, lors de l'utilisation, après avoir démasqué l'orifice 3 et perforé la surface 5 de séparation des deux capacités, et réalisé ainsi le mélange des deux phases, on puisse parfaire ce mélange par agitation du milieu sans débordement obligé.

## Revendications

1. Procédé destiné à assurer la longue conservation de compositions alimentaires dans la constitution desquelles entrent essentiellement de la farine de céréales, des oeufs, du sucre, du lait ou un substitut du lait tel que le filtrat alimentaire de soja et des produits aromatisants, suivant lequel les constituants de la pâte sont répartis en deux phases, une phase poudre et une phase liquide stérilisée, caractérisé en ce que l'on incorpore à la phase poudre, contenant la farine et le sucre, les blancs d'oeuf en poudre et à la phase liquide stérilisée, le jaune d'oeuf, en ce que chacune des phases est introduite dans un emballage distinct, aseptisé, étanche, pour le stockage séparé des deux phases, et en ce que les deux phases sont mélangées lors de l'utilisation.

2. Procédé suivant la revendication 1, selon lequel la phase poudre est contenue dans un récipient à atmosphère chimiquement inerte, constituée de préférence d'un gaz neutre.

3. Conditionnement pour la mise en oeuvre du procédé suivant la revendication 1, constitué par deux capacités superposées et assemblées de façon à réaliser un bloc homogène et étanche, la capacité supérieure renfermant la phase liquide, présentant un orifice operculé, la capacité inférieure contenant la phase poudre, les deux capacités étant séparées par une surface susceptible d'être perforée par un moyen dont est muni le conditionnement.

4. Conditionnement suivant la revendication 3, dans lequel le volume de la capacité renfermant la phase poudre est déterminé de façon à créer un espace contenant la poudre, un espace correspondant au volume de la phase liquide et un espace supplémentaire permettant l'agitation commode du mélange réalisé, à l'utilisation, une fois démasqué l'orifice et établie la communication entre les capacités par perforation de la séparation.

## Claims

1. Process intended for the long-term preserving of food compositions, the constitution of which contains, essentially, cereal flour, eggs, sugar, milk or a milk substitute such as soya bean filtrate and flavouring products, according to which the constituents of the dough are divided into two phases, a powder phase and a sterilized liquid phase, characterized in that the egg whites in powder form are incorporated into the powder phase, containing the flour and the sugar, and the egg yolk is incorporated into the sterilized liquid phase, in that each of the phases is introduced into a distinct, asepticized, sealed wrapping for the separate storage of the two phases, and in that the two phases are mixed together during use.

2. Process according to Claim 1, according to which the powder phase is contained in a receptacle having a chemically inert atmosphere, preferably constituted of a neutral gas.

3. Packaging for carrying out the process according to Claim 1, constituted of two superimposed chambers, assembled together in such a way as to form a homogeneous sealed block, the upper chamber containing the liquid phase having a capped orifice, the lower chamber containing the powder phase, the two chambers being separated by a surface capable of being perforated by a means, with which the packaging is equipped.

4. Packaging according to Claim 3, in which the volume of the chamber containing the powder phase is determined in such a way as to create a space containing the powder, a space corresponding to the volume of the liquid phase and a supplementary space, permitting the appropriate stirring of the mixture produced, during use, once the orifice has been uncovered and communication has been established between the chambers by perforation of the separation.

## Patentansprüche

1. Verfahren zur Sicherstellung einer dauerhaften Konservierung von Lebensmittelmischungen einer Zusammensetzung in der im wesentlichen Getreidemehl, Eier, Zucker, Milch oder ein Milchersatz wie Lebensmittelsojafiltrat und Aromastoffe enthalten sind, gemäß dem die Teigbestandteile in zwei Phasen, eine pulverförmige und eine sterilisierte flüssige Phase geteilt werden, **dadurch gekennzeichnet,** daß in der pulverförmigen Phase, die das Mehl und den Zucker enthält, das Eiweißpulver und in der sterilisierten flüssigen Phase das Eigelb eingemischt ist, daß jede Phase in eine gesonderte dichte, aseptische Kammer zur getrennten Lagerung dieser zwei Phasen gefüllt wird und daß die zwei Phasen während ihrer Verwendung miteinander vermischt werden.

2. Verfahren nach Anspruch 1, gemäß dem sich die pulverförmige Phase in einer Kammer mit chemisch inerter Atmosphäre, die vorzugsweise aus einem neutralen Gas besteht, befindet.

3. Verpackung für die Anwendung des Verfahrens nach Anspruch 1, welche aus zwei übereinanderliegenden Kammern besteht, die so miteinander verbunden sind, daß sie einen einheitlichen und dichten Block bilden, wobei die obere Kammer, die mit einer verschlossenen Öffnung versehen ist, die flüssige Phase und die untere Kammer die pulverförmige Phase enthält und diese zwei Kammern durch einen Zwischenboden getrennt sind, der von einem an der Verpackung befestigten Mittel durchstoßen werden kann.

4. Verpackung nach Anspruch 3, in welcher das Volumen der die pulverförmige Phase enthaltenden Kammer so ausgelegt ist, daß Raum für das Pulver, dem Volumen der flüssigen Phase entsprechender Raum und zusätzlicher Raum vorhanden ist, der das unkomplizierte Umrühren des zu seiner Verwendung erzeugten Gemisches erlaubt, nachdem der Verschluß geöffnet und die Verbindung zwischen den Kammern mittels Durchstoßen des Zwischenbodens herstellt ist.
